# EUROPÄISCHE PATENTSCHRIFT

(11) **EP 1 768 871 B1**
(45) Veröffentlichungstag und Bekanntmachung des Hinweises auf die Patenterteilung: **16.03.2011**
(21) Anmeldenummer: 05761934.8
(22) Anmeldetag: 07.06.2005
(51) Int. Cl.: B60N 2/48, B60N 2/427

(54) **CRASHAKTIVE KOPFSTÜTZE**
CRASH-ACTIVE HEADREST
APPUI-TETE ACTIF EN CAS DE CHOC

(30) Priorität: 22.07.2004 DE 102004035582
(43) Veröffentlichungstag der Anmeldung: 04.04.2007
(73) Patentinhaber: KEIPER GmbH & Co. KG, 67657 Kaiserslautern (DE)
(72) Erfinder: SCHILLING, Jürgen, 67659 Kaiserslautern (DE); HIPPEL, Daniel, 67722 Winnweiler (DE); MÜNSTER, Ralf, 67661 Kaiserslautern (DE); HEEG, Norbert, 66994 Dahn (DE)
(74) Vertreter: Patentanwälte Hosenthien-Held und Dr. Held
(86) Internationale Anmeldenummer: PCT/EP2005/006086
(87) Internationale Veröffentlichungsnummer: WO 2006/010405

(56) Entgegenhaltungen:
- WO-A-2004/056606
- DE-A1- 19 951 966
- US-A- 5 820 211
- US-B1- 6 213 548

## Beschreibung

Die Erfindung betrifft eine Kopfstütze mit den Merkmalen des Oberbegriffs des Anspruches 1.

Aus der DE 199 51 966 A1 ist eine Kopfstütze dieser Art bekannt, bei welcher das Prallelement mittels eines als Parallelogramm ausgebildeten Viergelenks im Crashfall ausfährt, wobei als Antrieb ein federbelasteter, das Prallelement beaufschlagender Schwenkarm dient, welcher in der Crashstellung verriegelt.

Der Erfindung liegt die Aufgabe zu Grunde, eine Kopfstütze der eingangs genannten Art zu verbessern. Diese Aufgabe wird erfindungsgemäß durch eine Kopfstütze mit den Merkmalen des Anspruches 1 gelöst. Vorteilhafte Ausgestaltungen sind Gegenstand der Unteransprüche.

Dadurch, daß wenigstens ein Schenkel der Feder eine der Schwingen bildet, verringert sich die Anzahl der benötigten Bauteile, was die Herstellungskosten reduziert und die Montage vereinfacht. Die Funktionalität der crashaktiven Kopfstütze bleibt dabei unbeeinflusst. Die Anordnung des Schenkels entspricht im wesentlichen derjenigen einer Schwinge, d.h. vorzugsweise steht der Schenkel radial von der zugeordneten Achse des Trägers ab. Vorzugsweise ist die Feder teilweise auf diese Achse aufgewickelt oder bildet selbst die Achse, indem die Feder im Träger fixiert ist, während die Anbindung an das Prallelement beispielsweise mittels einer Abkröpfung, Schulter oder dergleichen erfolgt, die dann teilweise parallel zur Achse verläuft. Die Verriegelung der Ausgangsstellung erfolgt beispielsweise mittels einer Fangzunge, Abkröpfung oder dergleichen, welche von einer Klinke des Trägers gehalten wird.

Die Feder ist vorzugsweise einteilig aus einem durchgängigen Federstahldraht geformt und symmetrisch zu der durch eine vertikale Ebene definierten Mitte der Kopfstütze aufgebaut, um einen symmetrischen Antrieb zu erreichen. Der als Schwinge dienende Schenkel ist dann vorzugsweise zweifach vorgesehen und beispielsweise in einem Mittelabschnitt der Feder vorgesehen, wo auch die Abkröpfung(en) und die vorzugsweise zwischen den Schenkeln gelegene Fangzunge vorgesehen sein können. Der bzw. die Schenkel bilden vorzugsweise eine obere Schwinge, wobei dann insgesamt zwei Viergelenke aus je einem Schenkel, einer unteren Schwinge sowie dem Prallelement und dem Träger vorgesehen sind.

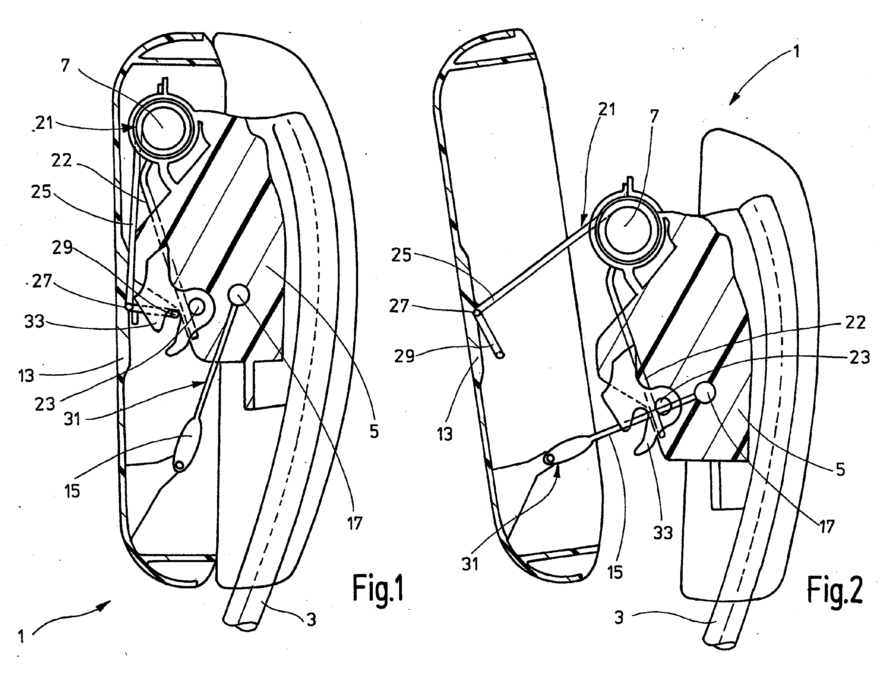

Im folgenden ist die Erfindung anhand eines in der Zeichnung dargestellten Ausführungsbeispiels näher erläutert. Es zeigen
- Fig. 1: eine Seitenansicht des Ausführungsbeispiels in der Ausgangsstellung und
- Fig. 2: eine Ansicht entsprechend Fig. 1 in der Crashstellung.

Im Ausführungsbeispiel ist eine Kopfstütze 1 für einen Fahrzeugsitz eines Kraftfahrzeuges vorgesehen. Die Kopfstütze 1 ist mittels zweier paralleler Kopfstützenstangen 3, die verschieblich in der Rückenlehne des Fahrzeugsitzes gehaltert sind, in ihrer Höhe einstellbar. Die Anordnung der Kopfstütze 1 auf dem Fahrzeugsitz und die gewöhnliche Fahrtrichtung des Kraftfahrzeuges definieren die verwendeten Richtungsangaben. Die Kopfstützenstangen 3 sind mit ihrem oberen Ende fest in einen quer zu den Kopfstützenstangen 3 angeordneten Träger 5 eingeführt. Am oberen Ende des Trägers 5 ist eine horizontal angeordnete, quer zu den Kopfstützenstangen 3 verlaufende Achse 7 im Träger 5 definiert, welche vorliegend nur mathematisch vorhanden ist, in abgewandelter Ausführung jedoch auch körperlich vorhanden sein kann. Die Kopfstütze 1 ist im wesentlichen symmetrisch zu einer vertikalen Mittelebene aufgebaut. In Fahrtrichtung vor dem Träger 5 ist ein Prallelement 13 angeordnet. Auf dem Prallelement 13 ist ein Polsterteil angeordnet, wobei das Prallelement 13 zugleich der Polsterträger sein kann, d.h. das Polster direkt am Prallelement 13 befestigt sein kann. Ein Paar unterer Schwingen 15 von länglicher Gestalt sind einerseits jeweils mittels eines horizontalen, zur Achse 7 parallelen Schwingenlagerbolzens 17 am Träger 5 und andererseits am unteren Ende des Prallelements 13 angelenkt. Eine Doppelschenkelfeder 21, welche symmetrisch zu einer durch eine vertikale Ebene definierten Mitte der Kopfstütze 1 ausgebildet ist, dient als Energiespeicher und ist aus einem durchgängigen Federstahldraht geformt. Ausgehend von der Mitte der Kopfstütze 1 stützt sich die Doppelschenkelfeder 21 mit je einem Endabschnitt 22 an einer metallischen, zylindrischen Querstange 23 ab, welche parallel zur Achse 7 im Träger 5 gelagert ist. An jeden Endabschnitt 22, welcher von der Querstange 23 aus radial zur Achse 7 hin verläuft, schließt sich seitlich nach außen hin je ein schraubenförmig um die Achse 7 gewickelter Wicklungsabschnitt an. Die äußeren Enden der beiden Wickelungsabschnitte sind mit einem gemeinsamen, U-förmigen Bügelabschnitt verbunden, mittels welchem die Doppelschenkelfeder 21 das Prallelement 13 beaufschlagt. Der Bügelabschnitt besteht aus zwei von der Achse 7 radial abstehenden, die äußeren Enden der Doppelschenkelfeder 21 bildenden Schenkeln 25, je einer weitgehend parallel zur Achse 7 zur Mitte der Kopfstütze 1 hin verlaufenden Abkröpfung 27, an welcher das Prallelement 13 angebracht ist, und in der Mitte einer Fangzunge 29. Der Träger 5, jeweils ein Schenkel 25, das Prallelement 13 und die jeweilige untere Schwinge 15 bilden jeweils ein Viergelenk 31.

Die Doppelschenkelfeder 21 wird in der Ausgangsstellung gehalten durch eine Klinke 33, welche mit ihrem Klinkenmaul die Fangzunge 29 aufnimmt. In einer Projektion auf die Mittelebene verläuft die Fangzunge 29 etwa senkrecht zu den Schenkeln 25. Die Klinke 33 ist schwenkbar auf der Querstange 23 gelagert, mittels einer gegenüber der Doppelschenkelfeder 21 schwachen Feder gegenüber dem Träger 5 in Öffnungsrichtung vorgespannt und wird ihrerseits durch einen nicht näher dargestellten Hebelmechanismus und letztendlich durch ein Magnetsystem gehalten.

Im Falle eines Heckcrashs erhält ein Elektromagnet des Magnetsystems einen Impuls und gibt den Hebelmechanismus frei, welcher die Klinke 33 freigibt. Dadurch kann die sich entspannende Doppelschenkelfeder 21 das Prallelement 13 nach vorne drücken und zeitgleich die Klinke 33 öffnen. Damit ist die crashaktive Kopfstütze 1 ausgelöst. Unter Ausfahren der Viergelenke 29 schnellt das Prallelement 13 nach vorne in eine Crashstellung.

Die crashaktive Kopfstütze kann nach einem Crash rückgesetzt werden, d.h. reversibel in die Ausgangsstellung gebracht werden. Hierzu wird durch ein nicht näher dargestelltes Werkzeug in den Träger 5 eingeführt und der Hebelmechanismus zurückgesetzt. Durch manuellen Druck von vorne auf das Prallelement 13, vorzugsweise mit beiden Händen, kann nun das Prallelement 13 entgegen der Kraft der sich spannenden Doppelschenkelfeder 25 wieder nach hinten bewegt werden, zu der aufnahmebereiten Klinke 33 hin. Sobald die Fangzunge 29 in Anlage die Klinke 33 gelangt, wird letztere in ihre Ausgangsstellung gedreht und dort gehalten. In abgewandelter Ausführung kann zuerst das Prallelement 13 zurückgedrückt und dann der Hebelmechanismus zurückgesetzt werden.

### Bezugszeichenliste

- 1: Kopfstütze
- 3: Kopfstützenstange
- 5: Träger
- 7: Achse
- 13: Prallelement
- 15: untere Schwinge
- 17: Schwingenlagerbolzen
- 21: Doppelschenkelfeder
- 22: Endabschnitt
- 23: Querstange
- 25: Schenkel
- 27: Abkröpfung
- 29: Fangzunge
- 31: Viergelenk
- 33: Klinke

## Patentansprüche

1. Kopfstütze für einen Fahrzeugsitz, mit einem Träger (5), wenigstens zwei beweglich am Träger (5) angeordneten, um horizontale Achsen (7, 17) schwenkbaren Schwingen (15, 25), einem an den Schwingen (15, 25) angelenkten Prallelement (13), welches mit den Schwingen (15, 25) und dem Träger (5) wenigstens ein Viergelenk (31) bildet, und einer Feder (21) als Energiespeicher, welche im Crashfall das Viergelenk (31) antreibt, so daß das Prallelement (13) aus einer Ausgangsstellung heraus nach vorne in eine Crashstellung ausfährt, **dadurch gekennzeichnet, daß** die Feder (21) eine Schenkelfeder ist, und wenigstens ein Schenkel (25) der Feder (21) eine der Schwingen bildet.

2. Kopfstütze nach Anspruch 1, **dadurch gekennzeichnet, daß** der Schenkel (25) radial von der zugeordneten Achse (7) des Trägers (5) absteht.

3. Kopfstütze nach Anspruch 1 oder 2, **dadurch gekennzeichnet, daß** der Schenkel (25) an einem zur Seite der Kopfstütze hin äußeren Ende eines Wicklungsabschnitts der Feder (21) vorgesehen ist.

4. Kopfstütze nach einem der Ansprüche 1 bis 3, **dadurch gekennzeichnet, daß** die Feder (21) eine Abkröpfung (27) zur Befestigung am Prallelement (13) aufweist.

5. Kopfstütze nach einem der Ansprüche 1 bis 4, **dadurch gekennzeichnet, daß** die Feder (21) eine Fangzunge (29) aufweist, welche in der Ausgangsstellung von einer am Träger (5) gelagerten Klinke (33) gehalten wird.

6. Kopfstütze nach einem der Ansprüche 1 bis 5, **dadurch gekennzeichnet, daß** der Schenkel (25) eine obere Schwinge bildet.

7. Kopfstütze nach einem der Ansprüche 1 bis 6, **dadurch gekennzeichnet, daß** die Feder (21) zwei Schenkel (25) aufweist, welche symmetrisch zur Mitte der Kopfstütze (1) angeordnet sind.

8. Kopfstütze nach Anspruch 6 und 7, **dadurch gekennzeichnet, daß** zwei Viergelenke (31) aus je einem Schenkel (25), einer unteren Schwinge (15) sowie dem Prallelement (13) und dem Träger (5) vorgesehen sind.

9. Kopfstütze nach Anspruch 5 und Anspruch 7 oder 8, **dadurch gekennzeichnet, daß** die Fangzunge (29) zwischen den Schenkeln (25) vorgesehen ist.

10. Kopfstütze nach einem der Ansprüche 1 bis 9, **dadurch gekennzeichnet, daß** die Feder (21) aus einem durchgängigen Federstahldraht geformt ist.

11. Kopfstütze nach einem der Ansprüche 1 bis 10, **dadurch gekennzeichnet, daß** die Feder (21) an einer metallischen Querstange (23) im Träger (5) abgestützt ist.

## Claims

1. A head restraint for a vehicle seat, with a support (5), at least two rockers (15, 25) which are arranged movably on the support (5) and are pivotable about horizontal spindles (7, 17), an impact element (13) which is coupled to the rockers (15, 25) and, with the rockers (15, 25) and the support (5), forms at least one four-bar linkage (31), and a spring (21) as an energy accumulator which drives the four-bar linkage (31) in the event of a crash, so that the impact element (13) extends forwards out of a starting position into a crash position, **characterized in that** the spring (21) is a leg spring, and at least one leg (25) of the spring (21) forms one of the rockers.

2. The head restraint as claimed in claim 1, **characterized in that** the leg (25) protrudes radially from the associated spindle (7) of the support (5).

3. The head restraint as claimed in claim 1 or 2, **characterized in that** the leg (25) is provided at an end of a winding section of the spring (21), such end being an outer end with respect to the side of the head restraint.

4. The head restraint as claimed in one of claims 1 to 3, **characterized in that** the spring (21) has a bent portion (27) for fastening to the impact element (13).

5. The head restraint as claimed in one of claims 1 to 4, **characterized in that** the spring (21) has an intercepting tongue (29) which, in the starting position, is held by a latch (33) mounted on the support (5).

6. The head restraint as claimed in one of claims 1 to 5, **characterized in that** the leg (25) forms an upper rocker.

7. The head restraint as claimed in one of claims 1 to 6, **characterized in that** the spring (21) has two legs (25) which are arranged symmetrically with respect to the center of the head restraint (1).

8. The head restraint as claimed in claims 6 and 7, **characterized in that** two four-bar linkages (31) are provided, each comprising a leg (25), a lower rocker (15) and also the impact element (13) and the support (5) .

9. The head restraint as claimed in claim 5 and claim 7 or 8, **characterized in that** the intercepting tongue (29) is provided between the legs (25).

10. The head restraint as claimed in one of claims 1 to 9, **characterized in that** the spring (21) is formed from a continuous spring steel wire.

11. The head restraint as claimed in one of claims 1 to 10, **characterized in that** the spring (21) is supported on a metallic transverse rod (23) in the support (5).

## Revendications

1. Appuie-tête pour un siège de véhicule, comprenant un support (5), au moins deux coulisses (15, 25) disposées de façon mobile sur le support (5), pouvant basculer autour d'axes horizontaux (7, 17), un élément de butée (13) articulé sur les coulisses (15, 25), lequel forme au moins un quadrilatère articulé (31) avec les coulisses (15, 25) et le support (5), et un ressort (21) comme accumulateur d'énergie, qui entraîne le quadrilatère articulé (31) en cas de collision, de telle sorte que l' élément de butée (13) sort d'une position de départ vers l'avant dans une position de collision, **caractérisé par le fait que** le ressort (21) est un ressort à branches, et au moins une branche (25) du ressort (21) forme l'une des coulisses.

2. Appuie-tête selon la revendication 1, **caractérisé par le fait que** la branche (25) dépasse radialement de l'axe (7) attribué du support (5).

3. Appuie-tête selon l'une des revendications 1 ou 2, **caractérisé par le fait que** la branche (25) est prévue sur une extrémité, extérieure en direction du côté de l'appuie-tête, d'une partie d'enroulement du ressort (21).

4. Appuie-tête selon l'une quelconque des revendications 1 à 3, **caractérisé par le fait que** le ressort (21) présente une partie coudée (27) pour la fixation sur l'élément de butée (13).

5. Appuie-tête selon l'une quelconque des revendications 1 à 4, **caractérisé par le fait que** le ressort (21) présente une languette d'interception (29) qui est maintenue dans la position de départ par un cliquet (33) fixé sur le support (5).

6. Appuie-tête selon l'une quelconque des revendications 1 à 5, **caractérisé par le fait que** la branche (25) forme une coulisse supérieure.

7. Appuie-tête selon l'une des revendications 1 à 6, **caractérisé par le fait que** le ressort (21) présente deux branches (25) qui sont disposées de façon symétrique par rapport au centre de l'appuie-tête (1).

8. Appuie-tête selon les revendications 6 et 7, **caractérisé par le fait que** deux quadrilatères articulés (31) constitués chacun d'une branche (25), d'une coulisse inférieure (15) et de l'élément de butée (13) et du support (5) sont prévus.

9. Appuie-tête selon la revendication 5 et l'une des revendications 7 ou 8, **caractérisé par le fait que** la languette d'interception (29) est prévue entre les branches (25).

10. Appuie-tête selon l'une des revendications 1 à 9, **caractérisé par le fait que** le ressort (21) est formé à base d'un fil d'acier pour ressort continu.

11. Appuie-tête selon l'une des revendications 1 à 10, **caractérisé par le fait que** le ressort (21) est soutenu sur une barre transversale métallique (23) dans le support (5).
